# EUROPÄISCHE PATENTSCHRIFT

(11) **EP 0 996 601 B1**
(45) Veröffentlichungstag und Bekanntmachung des Hinweises auf die Patenterteilung: **09.05.2001**
(21) Anmeldenummer: 98937469.9
(22) Anmeldetag: 10.06.1998
(51) Int. Cl.: C04B 35/105, C04B 35/106

(54) **FEUERFESTER WERKSTOFF AUF BASIS CHROMKORUND, CHROMKORUND-STEIN SOWIE VERWENDUNG DES STEINS**
REFRACTORY, CHROME-ALUMINA-BASED MATERIAL, CHROME-ALUMINA BRICK AND USE OF THE BRICK
MATERIAU REFRACTAIRE A BASE DE CORINDON DE CHROME, PIERRE EN CORINDON DE CHROME ET UTILISATION DE CELLE-CI

(30) Priorität: 01.07.1997 DE 19727917
(43) Veröffentlichungstag der Anmeldung: 03.05.2000
(73) Patentinhaber: DIDIER-WERKE AG, 65189 Wiesbaden (DE)
(72) Erfinder: MOSSAL, Karl-Heinz, D-65510 Idstein (DE); YESILTAS, Selim, D-65375 Oestrich (DE); KLEINEVOSS, Albert, D-556203 Hoehr (DE); WEICHERT, Thomas, D-65307 Bad Schwalbach (DE)
(74) Vertreter: Becker, Thomas, Dr., Dipl.-Ing.
(86) Internationale Anmeldenummer: EP9803513
(87) Internationale Veröffentlichungsnummer: WO9901399

(56) Entgegenhaltungen:
- EP-A- 0 242 769
- GB-A- 2 098 198
- US-A- 4 792 538

## Beschreibung

Die Erfindung betrifft einen feuerfesten Werkstoff auf Basis Chromkorund, einen aus diesem Werkstoff hergestellten Chromkorundstein sowie dessen Verwendung.

Aus Schulle "Feuerfeste Werkstoffe", 1. Auflage, 1990 (ISBN 3-342-00306-5), Seiten 288, 289 sind feuerfeste Werkstoffe auf Basis Chromkorund mit einem Anteil von etwa 10 Gew.-% Cr₂O₃ und etwa 90 Gew.-% Al₂O₃ bekannt. Dort werden auch feuerfeste Werkstoffe auf Basis Cr₂O₃/ZrO₂ erwähnt. Gleichzeitig wird angegeben, daß der Einsatz solcher Werkstoffe als Feuerfestkeramik wenig bekannt ist.

In der EP 0 242 769 A2 wird ein dichter keramischer Stein beschrieben, der aus 10 bis 90 Gew.-% Al₂O₃, 90 bis 10 Gew.-% Cr₂O₃ und 0 bis 40 Gew.-% ZrO₂ bestehen kann, wobei der Stein eine Dichte von mindestens 92 % seiner theoretischen Dichte besitzen soll. Entsprechend werden die genannten Oxide ausschließlich in sehr feiner Kornfraktion (< 50 µm) eingesetzt. Diese Steine finden unter anderem in Glasschmelzöfen Anwendung.

Die bekannten Steine sind aufgrund ihrer hohen Dichte relativ spröde und zeigen insbesondere bei höheren Anwendungstemperaturen (oberhalb 1.500° C) ein unbefriedigendes Korrosionsverhalten.

Sie lassen sich deshalb beispielsweise in Drehrohröfen, wie sie bei der Müllverbrennung, insbesondere bei der Sondermüllverbrennung Anwendung finden, nicht einsetzen.

Der Erfindung liegt insoweit die Aufgabe zugrunde, einen feuerfesten Werkstoff und einen zugehörigen Stein anzubieten, die für den Einsatz in schlackeführenden Öfen mit hoher Temperaturwechselbeanspruchung und hohen Betriebstemperaturen (bis 1.650° C) geeignet sind. Dabei wird auch eine möglichst hohe Gefügeelastizität angestrebt.

Die Erfindung hat erkannt, daß Werkstoffe auf Basis Chromkorund diese Anforderungen erfüllen können. Dazu ist es notwendig, die Anteile an Chromoxid und Korund ebenso anzupassen wie die Korngröße der dazu ausgewählten Rohstoffe.

In ihrer allgemeinsten Ausführungsform betrifft die Erfindung danach einen feuerfesten Werkstoff auf Basis Chromkorund mit:
- 5 bis 35 Gew.-%, vorzugsweise 10 bis 30 Gew.-% Cr₂O₃ in einer Korngröße < 0,1 mm,
- 1 bis 10 Gew.-%, vorzugsweise 3 bis 6 Gew.-% Zirkondioxid in einer Korngröße zwischen 0,5 und 4,0 mm,
- 55 bis 94 Gew.-%, vorzugsweise 62 bis 87 Gew.-% Aluminiumoxid (Korund) in einer Korngröße zwischen 0,2 und 4,0 mm.

Ein solcher Werkstoff auf Basis Chromkorund läßt sich zu Steinen mit hoher Gefügeelastizität verarbeiten, die für die genannten Einsatzbereiche, beispielsweise Drehrohröfen für die Sondermüllverbrennung bis 1.700° C Anwendungstemperaturen, geeignet sind.

Der Chromoxidanteil sollte möglichst feinteilig vorliegen, weshalb nach einer Ausführungsform eine Korngröße < 0,05 mm (< 50 µm) vorgeschlagen wird.

Der genannte Anteil an Zirkondioxid kann im wesentlichen aus Baddeleyit bestehen, wobei als Baddeleyit-Träger entsprechende mittel- bis grobkörnige Baddeleyit-Rohstoffe Verwendung finden können, beispielsweise Sinter-Zirkonmullit, Schmelz-Zirkonmullit, Sinter-Zirkonkorund und Schmelz-Zirkonkorund, einzeln oder in Mischung.

Der ZrO₂-Gehalt beeinflußt wesentlich die Gefügeelastizität und damit die Temperaturwechselbeständigkeit.

Soweit korundhaltige Rohstoffe für den Zirkondioxid-Anteil verwendet werden, ist der entsprechende Korundanteil in die vorgenannte Korund-Komponente (55 bis 94 Gew.-% der Gesamtmischung) entsprechend einzurechnen.

Nach einer Ausführungsform kann der feuerfeste Werkstoff einen Anteil an SiO₂ < 3 Gew.-% aufweisen. Als Rohstoff für diesen SiO₂-Anteil kann beispielsweise Mullit verwendet werden.

Soweit der genannte Zirkonmullit als ZrO₂-Rohstoff Anwendung findet, gilt auch hier, daß der Mullitanteil, gegebenenfalls anteilig, in die SiO₂-Komponente eingerechnet werden kann.

Die Korund-Matrix besteht beispielsweise aus Sinterkorund, Schmelzkorund oder Mischungen daraus.

Der genannte feuerfeste Werkstoff läßt sich zu Steinen verarbeiten. Die Steine können gepreßt oder gestampft sein. Sie werden bei Temperaturen zwischen 1.450 und 1.700° C gebrannt.

Der spezifische Kornaufbau der einzelnen Werkstoff-Komponenten sowie der Zusatz an ZrO₂ (Baddeleyit) sind maßgeblich verantwortlich für die hohe Temperaturwechselbeständigkeit und den geringen Elastizitätsmodul eines solchen Steins.

Durch entsprechende Rohstoffauswahl sowie Adaptierung der Mengenanteile an Cr₂O₃, ZrO₂ und Al₂O₃ sowie gegebenenfalls SiO₂ und Fe₂O₃ (der Anteil an Fe₂O₃ sollte < 0,5 Gew.-% betragen) sowie schließlich die Einhaltung der obengenannten Korngrößen für die einzelnen Werkstoff-Komponenten läßt sich ein Chromkorund-Stein nach Brand bei 1.450 bis 1.700° C herstellen, der eine offene Porosität zwischen 9 und 18 Vol.-% sowie einen Elastizitätsmodul < 30.000 N/mm² aufweist.

Dabei kann der Elastizitätsmodul durch entsprechende Einstellung der vorgenannten Parameter auf Werte bis 15.000 N/mm² gesenkt werden.

Die Temperaturwechselbeanspruchung (gemessen nach DIN EN 993, Teil 11) ergibt einen Wert > 30.

Die Korrosionsbeständigkeit dieser Steine ist gut.

Der Chromkorundstein, wie er vorstehend beschrieben wurde, läßt sich vorteilhaft in Drehrohröfen zur Müllverbrennung, insbesondere Sondermüllverbrennung, einsetzen. Er ist bis zu Temperaturen von 1.700° beständig, ohne seine hohe Gefügeelastizität und sein hervorragendes Korrosionsverhalten zu verlieren.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert.

Als Versatz Nr. 1 wurde eine Referenz-Probe nach dem Stand der Technik ausgewählt. Der Versatz Nr. 1 besteht aus 82 Gew.-% Korund der Korngröße 0,2 bis 3 mm, 8 Gew.-% calcinierter Tonerde gleicher Korngröße sowie 10 Gew.-% Chromoxidgrün.

Der erfindungsgemäße Versatz Nr. 2 besteht aus 70 Gew.-% Korund der Korngröße 0,2 bis 3 mm, 10 Gew.-% calcinierter Tonerde gleicher Korngröße, 10 Gew.-% Zirkonmullit der Korngröße 1,6 bis 3,2 mm sowie 10 Gew.-% Chromoxidgrün < 45 µm.

Der erfindungsgemäße Versatz Nr. 3 besteht aus 70 Gew.-% Korund der Kornfraktion 0,2 bis 3 mm, 10 Gew.-% calcinierter Tonerde gleicher Korngröße, 10 Gew.-% Baddeleyit (ZrO₂) der Korngröße 0,5 bis 2,5 mm sowie 10 Gew.-% Chromoxidgrün < 45 µm.

Unter Zugabe geringer Wasseranteile (ca. 1,0 Gew.-%, bezogen auf die Feststoff-Mischung) wurden Steine gepreßt und in allen Fällen bei 1.510° C (innerhalb des Temperaturbereiches 1.450 - 1.600° C) gebrannt.

Die offene Porosität der Steine betrug bei der Referenzprobe 1: 15,4 Vol.-%, bei der Probe Nr. 2: 17,6 Vol.-% und bei der Probe Nr. 3: 16,3 Vol.-%.

Die Kaltdruckfestigkeit wurde bei der Probe Nr. 1 mit 313 N/mm², bei der Probe Nr. 2 mit 98 N/mm² und bei der Probe Nr. 3 mit 166 N/mm² bestimmt.

Der Elastizitätsmodul betrug bei dem Referenzstein Nr. 1 79.900 N/mm² und bei den erfindungsgemäßen Steinen 2 und 3 22.356 beziehungsweise 28.200 N/mm².

Die gemäß DIN EN 993, Teil 11 gegenüber Wasser bestimmte Temperaturwechselbeständigkeit lag beim Referenzstein Nr. 1 bei 4 Zyklen, beim Stein gemäß Versatz Nr. 2 bei 32 Zyklen und bei dem Stein mit dem Versatz Nr. 3 bei 31 Zyklen.

Die vorstehenden Versuchsergebnisse zeigen insbesondere im Vergleich zur Referenzprobe Nr. 1 eine deutliche Überlegenheit der erfindungsgemäßen Steine hinsichtlich des Elastizitätsmoduls, der um etwa 63 bis 73 % reduziert werden konnte. Parallel dazu wurde die Temperaturwechselbeständigkeit um den Faktor > 7 erhöht.

## Patentansprüche

1. Feuerfester Werkstoff auf Basis Chromkorund mit
1.1 5 bis 35 Gew.-%, vorzugsweise 10 bis 30 Gew.-% Cr₂O₃ in einer Korngröße < 0,1 mm,
1.2 1 bis 10 Gew.-%, vorzugsweise 3 bis 6 Gew.-% ZrO₂ in einer Korngröße zwischen 0,5 und 4,0 mm,
1.3 55 bis 94 Gew.-%, vorzugsweise 64 bis 87 Gew.-% Al₂O₃ in einer Korngröße zwischen 0,2 und 4,0 mm.

2. Feuerfester Werkstoff nach Anspruch 1 mit einem Anteil an SiO₂ < 3,0 Gew.-%.

3. Feuerfester Werkstoff nach Anspruch 1 mit einem Anteil an Fe₂O₃ < 0,5 Gew.-%.

4. Feuerfester Werkstoff nach Anspruch 1, bei dem das Cr₂O₃ in einer Korngröße < 0,05 mm vorliegt.

5. Feuerfester Werkstoff nach Anspruch 1, bei dem der ZrO₂-Anteil von einem Baddeleyit enthaltenden Rohstoff gebildet wird.

6. Feuerfester Werkstoff nach Anspruch 5, bei dem der ZrO₂-Anteil von Sinter-Zirkonmullit, Schmelz-Zirkonmullit, Sinter-Zirkonkorund, Schmelz-Zirkonkorund oder einem ZAC-Material, einzeln oder in Mischung gebildet wird.

7. Feuerfester Werkstoff nach Anspruch 1, bei dem der ZrO₂-Anteil in einer Korngröße zwischen 1,5 und 3,0 mm vorliegt.

8. Feuerfester Werkstoff nach Anspruch 2, bei dem der SiO₂-Anteil von einem Mullit enthaltenden Rohstoff gebildet wird.

9. Chromkorund-Stein aus einem feuerfesten Werkstoff nach einem der Ansprüche 1 bis 8, bei dem die Mengenanteile an Cr₂O₃, ZrO₂, Al₂O₃ sowie gegebenenfalls SiO₂ und Fe₂O₃ und ihre Korngröße so aufeinander abgestimmt sind, daß der bei 1.450 bis 1.700° C gebrannte Stein eine offene Porosität zwischen 9 und 18 Vol.-% und einen Elastizitätsmodul < 30.000 N/mm² aufweist.

10. Verwendung eines Chromkorund-Steins nach Anspruch 9 in Drehrohröfen zur Müllverbrennung.

## Claims

1. A refractory material based on chromium corundum, comprising
1.1 5 to 35% by wt., preferably 10 to 30% by wt. of Cr₂O₃ having a particle size < 0.1 mm,
1.2 1 to 10% by wt., preferably 3 to 6% by wt. zirconia having a particle size between 0.5 and 4.0 mm,
1.3 55 to 94% by wt., preferably 64 to 87% by wt. alumina having a particle size between 0.2 and 4.0 mm.

2. The refractory material according to claim 1 comprising an SiO₂ portion of < 3.0% by wt.

3. The refractory material according to claim 1 comprising an Fe₂O₃ portion of < 0.5% by wt.

4. The refractory material according to claim 1, wherein the Cr₂O₃ has a particles size of < 0.05 mm.

5. The refractory material according to claim 1, wherein the ZrO₂ portion is formed by a raw material containing baddeleyite.

6. The refractory material according to claim 5, wherein the ZrO₂ portion is formed by sintered zirconium mullite, fused zirconium mullite, sintered zirconium corundum, fused zirconium corundum or a ZAC material, individually or in mixture.

7. The refractory material according to claim 1, wherein the ZrO₂ portion has a particle size between 1.5 and 3.0 mm.

8. The refractory material according to claim 2, wherein the SiO₂ portion is formed by a raw material containing mullite.

9. A chromium corundum brick of a refractory material according to any of claims 1 to 8, wherein the constituent amounts of Cr₂O₃, ZrO₂, Al₂O₃ and, optionally, SiO₂ and Fe₂O₃ are adapted in such a way that the brick fired at 1,450 to 1,700°C has an open porosity between 9 and 18% by vol. and a modulus of elasticity of < 30,000 N/mm².

10. The use of a chromium corundum brick according to claim 9 in a rotary kiln for incinerating refuse.

## Revendications

1. Matériau réfractaire à base de corindon de chrome, avec
1.1 5 à 35 % en poids, de préférence 10 à 30 % en poids de Cr₂O₃ dans une granularité < 0,1 mm,
1.2 1 à 10 % en poids, de préférence 3 à 6 % en poids de ZrO₂, dans une granularité située entre 0,5 et 4,0 mm,
1.3 55 à 94 % en poids, de préférence 64 à 87 % en poids d'Al₂O₃ dans une granularité située entre 0,2 et 4,0 mm.

2. Matériau réfractaire selon la revendication 1, avec une proportion en SiO₂ < 3,0 % en poids.

3. Matériau réfractaire selon la revendication 1, avec une proportion en Fe₂O₃ < 0,5 % en poids.

4. Matériau réfractaire selon la revendication 1, dans lequel le Cr₂O₃ se présente dans une granularité < 0,05 mm.

5. Matériau réfractaire selon la revendication 1, dans lequel la proportion de ZrO₂ est constituée d'une matière première contenant de la baddeleyite.

6. Matériau réfractaire selon la revendication 5, dans lequel la proportion de ZrO₂ est constituée de mullite de zirconium frittée, de mullite de zirconium ensimée, de corindon de zirconium fritté, de corindon de zirconium ensimé ou d'un matériau ZAC, individuellement ou en mélange.

7. Matériau réfractaire selon la revendication 1, dans lequel la proportion de ZrO₂ se situe dans une granularité comprise entre 1,5 et 3,0 mm.

8. Matériau réfractaire selon la revendication 2, dans lequel la proportion de SiO₂ est constituée d'une matière première contenant de la mullite.

9. Brique de corindon de chrome en matériau réfractaire selon l'une des revendications 1 à 8, dans laquelle les proportions quantitatives de Cr₂O₃, ZrO₂, Al₂O₃ et éventuellement de SiO₂ et Fe₂O₃ et leur granularités sont adaptées les unes aux autres de façon telle que la brique cuite à 1450 à 1700 °C présente une porosité ouverte située entre 9 et 18 % en vol. et un module d'élasticité < 30000 N/mm².

10. Utilisation d'une brique de corindon de chrome selon la revendication 9 dans des fours tubulaires rotatifs servant à l'incinération des déchets.
